# EUROPEAN PATENT SPECIFICATION

(11) **EP 4 561 079 B1**
(45) Date of publication and mention of the grant of the patent: **27.05.2026**
(21) Application number: 22952037.4
(22) Date of filing: 20.07.2022
(51) Int. Cl.: H04H 60/92, H04N 21/4363, H04N 21/45, H04W 24/08, H04W 52/38, H04B 17/23, H04W 52/24

(54) **IMAGE DISPLAY APPARATUS HAVING A WIRELESS COMMUNICATION APPARATUS**
BILDANZEIGEVORRICHTUNG MIT EINER DRAHTLOSEN KOMMUNIKATIONSVORRICHTUNG
APPAREIL D'AFFICHAGE D'IMAGE COMPRENANT UN APPAREIL DE COMMUNICATION SANS FIL

(43) Date of publication of application: 28.05.2025
(73) Proprietor: LG Electronics Inc., Yeongdeungpo-gu Seoul 07336 (KR)
(72) Inventor: SHIN, Bumjae, Seoul 06772 (KR)
(74) Representative: Frenkel, Matthias Alexander
(86) International application number: PCT/KR2022/010610
(87) International publication number: WO 2024/019188

(56) References cited:
- JP-A- 2005 210 591
- KR-A- 20090 015 050
- KR-A- 20130 068 149
- KR-A- 20140 118 741
- KR-A- 20220 080 270
- US-A1- 2004 214 539
- US-A1- 2010 279 615
- US-A1- 2016 014 824
- US-A1- 2018 332 587
- US-A1- 2018 338 244
- US-A1- 2021 176 733

## Description

### BACKGROUND

### 1. Technical Field

. The present disclosure relates to an image display apparatus including a wireless communiation device and more particularly, to a wireless communication device capable of efficiently performing wireless communicatior included in an image display apparatus.

### 2. Description of the Related Art

. A wireless communication device is a device that performs wireless communication among a plurality of devices.

. Such a wireless communication device is employed in an image display apparatus or the like and is used for content data reception or the like.

. When a wireless communication device is employed by an image display apparatus, the wireless channel and wireless transmission power are set based on the country code information stored in the memory of the image display apparatus.

. However, if the country code information stored in the image display apparatus does not match the country in which the image display apparatus is actually used, the wireless channel and wireless transmission power of the wireless communication device within the image display apparatus may fail to comply with the regulations of the corresponding country. In addition, the mismatch may result in inefficient use of the wireless channel.

US2016/014824A1 discloses a Wi-Fi network connection method, a Wi-Fi controller, and a Wi-Fi device, so as to resolve a problem that an existing Wi-Fi device often cannot use a local Wi-Fi network properly in different countries according to a set channel list.

### SUMMARY

. It is an object of the present disclosure to provide a wireless communication device capable of efficiently performing wireless communication included in an image display apparatus.

. It is another object of the present disclosure to provide a wireless communication device capable of stably receiving a wireless signal based on a second frequency band during data transmission based on a first frequency band and wireless signal reception based on the second frequency band, the wireless communication device included in an image display apparatus.

. In accordance with an aspect of the present disclosure, the above and other objects may be accomplished by the provision of an image display apparatus according to claim 1.

. Meanwhile, in response to the extracted country code information matching the country code information stored in the memory, wireless channel and wireless transmission power may be set based on the extracted country code information.

.Meanwhile, in response to the extracted country code information not matching the country code information stored in the memory, the signal processing device may be configured to display the message indicating a country code information mismatch and a country code information change message.

. Meanwhile, in response to a selection input for the extracted country code information while the extracted country code information does not match the country code information stored in the memory, the wireless communication device may be configured to set wireless channel and wireless transmission power based on the extracted country code information.

.Meanwhile, in response to a selection input for the country code information stored in the memory while the extracted country code information does not match the country code information stored in the memory, the wireless communication device may be configured to set wireless channel and wireless transmission power based on the country code information stored in the memory.

.Meanwhile, the wireless communication device may be configured to perform wireless communication with an adjacent access point device based on the set wireless channel and wireless transmission power, and the signal processing device may be configured to connect to a server through the access point device and display an image corresponding to image data received from the server on the display.

. Meanwhile, in response to a packet error rate of a wireless signal received from the access point device being greater than or equal to a predetermined threshold, the wireless communication device may be configured to perform channel change.

. Meanwhile, in response to channel change based on the packet error rate of a wireless signal received from the access point device being performed more than a reference number of times, scanning of the beacon frame may be performed again.

.Meanwhile, in response to a plurality of beacon frames being received from a plurality of adjacent access point devices, the wireless communication device may be configured to extract country code information from each of the plurality of beacon frames and set wireless channel and wireless transmission power based on the most frequently occurring country code information among the plurality of extracted country code information.

.Meanwhile, in response to a plurality of beacon frames being received from a plurality of adjacent access point devices, the wireless communication device may be configured to extract country code information from each of the plurality of beacon frames and, in response to the most frequently occurring country code information being not found among the plurality of extracted country code information, set wireless channel and wireless transmission power based on the country code information corresponding to the beacon frame with the strongest signal strength.

.Meanwhile, the wireless communication device may be configured to receive data based on one of frequency bands of 2.4 GHz, 5 GHz, and 6 GHz.

.Meanwhile, the wireless communication device may be configured to receive data based on one of frequency bands of 20 MHz, 40 MHz, 80 MHz, and 160 MHz.

.Meanwhile, in response to a plurality of beacon frames being received from a plurality of adjacent access point devices, the wireless communication device may be configured to extract country code information from each of the plurality of beacon frames and set wireless channel and wireless transmission power based on the most frequently occurring country code information among the plurality of extracted country code information.

.Meanwhile, in response to a plurality of beacon frames being received from a plurality of adjacent access point devices, the wireless communication device may be configured to extract country code information from each of the plurality of beacon frames and, in response to the most frequently occurring country code information being not found among the plurality of extracted country code information, set wireless channel and wireless transmission power based on the country code information corresponding to the beacon frame with the strongest signal strength.

Meanwhile, the wireless communication device comprises: a first antenna configured to receive a wireless signal of a first frequency band; a second antenna configured to receive a wireless signal of a second frequency band; a third antenna configured to receive a wireless signal of a third frequency band; and a processor configured to control one of the first to third antennas to scan a beacon frame, set wireless channel and wireless transmission power based on country code information stored in a memory in response to a beacon frame being not received within a predetermined period of time, extract country code information within the beacon frame in response to the beacon frame being received within the predetermined period of time, and set wireless channel and wireless transmission power based on the extracted country code information.

### BRIEF DESCRIPTION OF THE DRAWINGS

FIG. 1 is a view illustrating an outer appearance of an image display apparatus according to an embodiment of the present disclosure;
FIG. 2 is an internal block diagram of the image display apparatus of FIG. 1;
FIG. 3 is an internal block diagram of a controller of the image display apparatus of FIG. 2;
FIG. 4 is a view illustrating a method of controlling a remote control device of the image display apparatus of FIG. 2;
FIG. 5 is an internal block diagram of the remote control device of the image display apparatus of FIG. 2;
FIG. 6 is an example of an internal block diagram of a wireless communication device according to an embodiment of the present disclosure;
FIG. 7 is another example of an internal block diagram of a wireless communication device according to an embodiment of the present disclosure;
FIG. 8 is a flowchart illustrating a method of operating a wireless communication device according to an embodiment of the present disclosure;
FIG. 9 is a flowchart illustrating a method of operating a wireless communication device according to an embodiment of the present disclosure; and
FIGS. 10A to 12B are views referred to in description of FIG. 8 or 9.

### DETAILED DESCRIPTION

.Reference will now be made in detail to the preferred embodiments of the present disclosure, examples of which are illustrated in the accompanying drawings.

.The suffixes "module" and "unit" in elements used in description below are given only in consideration of ease in preparation of the specification and do not have specific meanings or functions. Therefore, the suffixes "module" and "unit" may be used interchangeably.

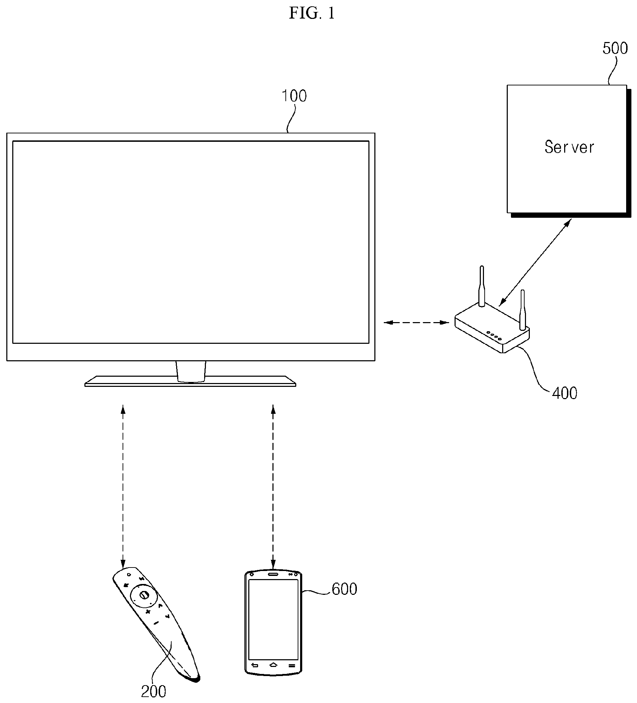

.FIG. 1 illustrates an outer appearance of an image display apparatus according to an embodiment of the present disclosure.

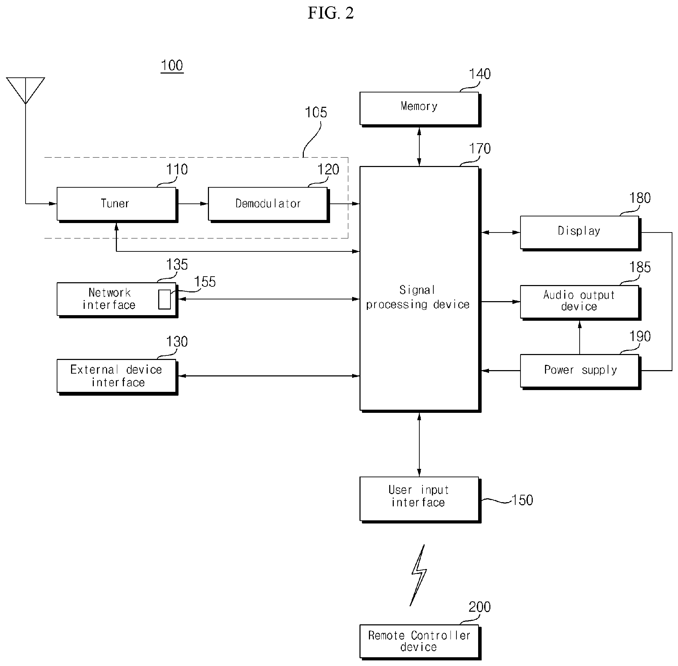

.Referring to FIG. 1, an image display apparatus 100 according to an embodiment of the present disclosure includes a display (180 in FIG. 2), a signal processing device (170 in FIG. 2) for displaying an image on the display, and a wireless communication device (155 in FIG. 2) for performing wireless communication with a remote control device 200 or a mobile terminal 600 or an approaching access point device 400.

.For example, the wireless communication device (155 in FIG. 2) within the image display apparatus 100 may access the approaching access point device 400 and receive an image signal from the server 500 through wireless communication.

.Meanwhile, the wireless communication device (155 in FIG. 2) within the image display apparatus 100 may be configured to perform Wi-Fi communication.

.For example, the wireless communication device (155 in FIG. 2) within the image display apparatus 100 may be configured to perform WI-FI6 or WI-FI6E communication.

.WI-FI6 may improve data speed even in a congested environment through OFDMA, MU-MIMO, and the like, and WI-FI6E may extend the WI-FI6 technology to the 6GHz band, including the ISM band (2.4GHz, 5GHz band).

.Meanwhile, WI-FI6/6E is being deployed in various ways in each country around the world, and in particular, wireless channels and wireless transmission power are set differently in each country.

.Accordingly, the image display apparatus 100 according to the embodiment of the present disclosure stores country code information in the memory (140 in FIG. 2) for wireless communication of the wireless communication device (155 in FIG. 2).

.Meanwhile, the wireless communication device 155 within the image display apparatus 100 according to an embodiment of the present disclosure scan a beacon frame, set wireless channel and wireless transmission power based on the country code information stored in the memory 140 in response to a beacon frame being not received within a predetermined period, and, in response to the beacon frame being received within the predetermined period, extract the country code information within the beacon frame and set wireless channel and wireless transmission power based on the extracted country code information. Accordingly, it is possible to efficiently perform wireless communication.

.Meanwhile, the image display apparatus 100 of FIG. 1 may be various apparatuses such as a TV, a monitor, a vehicle display, a tablet, a notebook computer, and a commercial display.

.FIG. 2 is an internal block diagram of the image display apparatus of FIG. 1.

.Referring to FIG. 2, the image display apparatus 100 according to an embodiment of the present disclosure may include a broadcast receiver 105, an external device interface 130, a memory 140, a user input interface 150, a sensor device (not shown), a signal processing device 170, a display 180, and an audio output device 185.

.The broadcast receiver 105 may include a tuner 110, a demodulator 120, and a network interface 135. As needed, the broadcast receiver 105 may be designed not to include the network interface 135 while including the tuner 110 and the demodulator 120. In contrast, the broadcast receiver 105 may include only the network interface 135 and does not include the tuner 110 and the demodulator 120.

.Unlike FIG. 2, the broadcast receiver 105 may include the external device interface 130. For example, a broadcast signal generated by a set-top box (not shown) may be received through the external device interface 130.

.The tuner 110 selects a radio frequency (RF) broadcast signal corresponding to a channel selected by a user or all prestored channels from among RF broadcast signals received through an antenna. In addition, the tuner 110 converts the selected RF broadcast signal into an intermediate frequency (IF) signal, a baseband image, or an audio signal.

.For example, if the selected RF broadcast signal is a digital broadcast signal, the tuner 110 converts the digital broadcast signal into a digital intermediate frequency (DIF) signal. If the selected RF broadcast signal is an analog broadcast signal, the tuner 110 converts the analog broadcast signal into an analog baseband image or an audio signal (composite video baseband signal (CVBS)/sound IF (SIF)). That is, the tuner 110 may process a digital broadcast signal or an analog broadcast signal. The analog baseband image or audio signal (CVBS/SIF) output from the tuner 110 may be directly input to the signal processing device 170.

.The tuner 110 may sequentially select RF broadcast signals for all broadcast channels stored through a channel memorization function from among RF broadcast signals received through the antenna and convert the same into an IF signal, a baseband image, or an audio signal.

. To receive broadcast signals of a plurality of channels, a plurality of tuners 110 may be provided. Alternatively, a single tuner to receive broadcast signals of a plurality of channels simultaneously may be provided.

.The demodulator 120 receives and demodulates the DIF signal converted by the tuner 110.

.After performing demodulation and channel decoding, the demodulator 120 may output a transport stream (TS) signal. Herein, the stream signal may be a signal obtained by multiplexing an image signal, an audio signal, and a data signal.

.The TS signal output from the demodulator 120 may be input to the signal processing device 170. After performing demultiplexing and image/audio signal processing, the signal processing device 170 outputs an image to the display 180 and audio to the audio output device 185.

.The external device interface 130 may transmit or receive data to or from an external device connected thereto. To this end, the external device interface 130 may include an audio/video (A/V) input/output device (not shown) or a wireless transceiver (not shown).

.The external device interface 130 may be connected to external devices such as a digital versatile disc (DVD), a Blu-ray player, a game console, a camera, a camcorder, a (notebook) computer, and a set-top box in a wired/wireless manner and perform input/output operations with external devices.

.The A/V input/output device may be configured to receive image and audio signals from an external device. The wireless transceiver may be configured to perform short-range wireless communication with other electronic devices.

.The network interface 135 provides an interface for connecting the image display apparatus 100 with a wired/wireless network including the Internet. For example, the network interface 135 may be configured to receive content or data provided by an Internet or content provider or a network operator over a network.

.Meanwhile, the network interface 135 may be equipped with the wireless communication device 155 capable of performing wireless communication.

.Meanwhile, different from the figure, the wireless communication device 155 may be integrated within the user input interface 150 or the external device interface 130, and the wireless communication device 155 may also be provided separately from the network interface 135.

.The memory 140 may store programs for processing and control of signals in the signal processing device 170 and also store a signal-processed image, audio, or data signal.

.The memory 140 may function to temporarily store an image signal, an audio signal, or a data signal input through the external device interface 130. In addition, the memory 140 may store information about a predetermined broadcast channel through the channel memorization function such as a channel map.

.While an embodiment in which the memory 140 is provided separately from the signal processing device 170 is illustrated in FIG. 2, embodiments of the present disclosure are not limited thereto. The memory 140 may be included in the signal processing device 170.

.The user input interface 150 may transmit a signal input by a user to the signal processing device 170 or transmit a signal from the signal processing device 170 to the user.

.For example, the user input interface 150 may transmit/receive user input signals such as power on/off, channel selection, and screen window setting to/from the remote control device 200 or transmit user input signals input through local keys (not shown) such as a power key, a channel key, a volume key, or a setting key to the signal processing device 170. The user input interface 150 may transmit user input signals input through a sensor device (not shown) to sense gesture of the user to the signal processing device 170 or transmit a signal from the signal processing device 170 to the sensor device (not shown).

.The signal processing device 170 may demultiplex the TS signal input through the tuner 110, the demodulator 120, or the external device interface 130 or process the demultiplexed signal to generate a signal for outputting an image or audio.

.The image signal processed by the signal processing device 170 may be input to the display 180 such that an image corresponding to the image signal may be displayed on the display. In addition, the image signal processed by the signal processing device 170 may be input to an external output device through the external device interface 130.

.The audio signal processed by the signal processing device 170 may be output to the audio output device 185 in the form of sound. In addition, the audio signal processed by the signal processing device 170 may be input to an external output device through the external device interface 130.

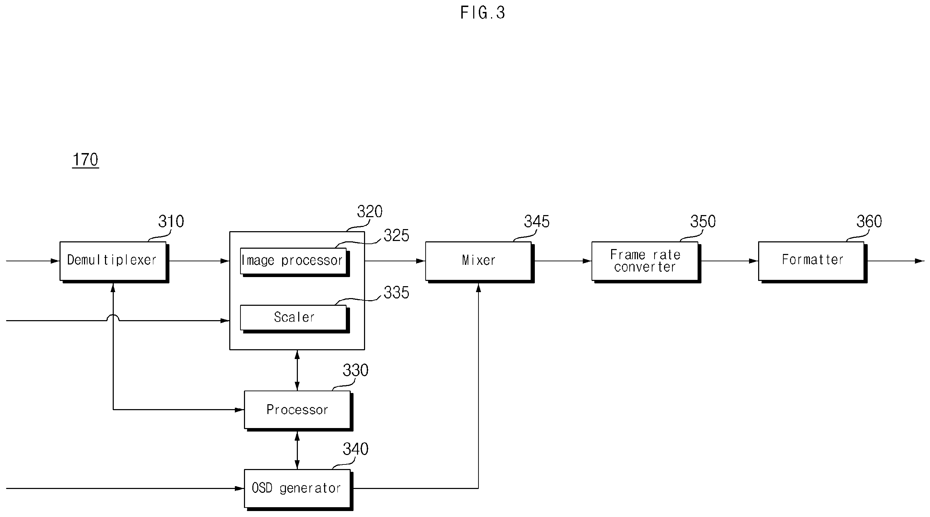

.Although not shown in FIG. 2, the signal processing device 170 may include a demultiplexer and an image processor, which will be described with reference to FIG. 3 later.

.Additionally, the signal processing device 170 may control an overall operation of the image display apparatus 100. For example, the signal processing device 170 may control the tuner 110 to tune to an RF broadcast corresponding to a channel selected by the user or a prestored channel.

.The signal processing device 170 may control the image display apparatus 100 according to a user command input through the user input interface 150 or according to an internal program.

.The signal processing device 170 may control the display 180 to display an image. Herein, the image displayed on the display 180 may be a still image, a moving image, a 2D image, or a 3D image.

.The signal processing device 170 may control the predetermined 2D object in an image displayed on the display 180 as a 3D object. For example, the object may be at least one of an accessed web page (a newspaper, a magazine, etc.), an electronic program guide (EPG), various menus, a widget, an icon, a still image, a moving image or text.

.Such a 3D object may be processed to have a sense of depth different from a network address of the image displayed on the display 180. Desirably, the 3D object may be processed to appear to protrude from the image displayed on the display 180.

.The signal processing device 170 may recognize the location of the user based on an image captured by a capture device (not shown). For example, the signal processing device 170 may recognize the distance between the user and the image display apparatus 100 (i.e., a z-axis coordinate). Additionally, the signal processing device 170 may recognize an x-axis coordinate and y-axis coordinate in the display 180, corresponding to the location of the user.

.Although not shown in FIG. 2, the image display apparatus 100 may further include a channel browsing processor for generating a thumbnail image corresponding to a channel signal or an external input signal. The channel browsing processor may be configured to receive a TS signal output from the demodulator 120 or a TS signal output from the external device interface 130, extract an image from the received TS signal, and generate a thumbnail image. The generated thumbnail image may be TS-decoded together with a decoded image and then input to the signal processing device 170. The signal processing device 170 may display a thumbnail list including a plurality of thumbnail images on the display 180 using received thumbnail images.

.The thumbnail list may be displayed in a brief viewing manner in which the thumbnail list is displayed in a portion of the display 180 on which an image is being displayed or in a full viewing manner in which the thumbnail list is displayed over most of the display 180. Thumbnail images in the thumbnail list may be sequentially updated.

.The display 180 generates drive signals by converting an image signal, a data signal, an on-screen display (OSD) signal, and a control signal processed by the signal processing device 170 or an image signal, a data signal, and a control signal received from the external device interface 130.

.The display 180 may be a plasma display panel (PDP), a liquid crystal display (LCD), an organic light emitting diode (OLED) display, a flexible display, or a 3D display.

. For 3D image viewing, the display 180 may be divided into a supplementary display type and a single display type.

. In the single display type, a 3D image may be implemented on the display 180 alone without a separate subsidiary device, e.g., glasses. Examples of the single display type may include various types such as a lenticular type and a parallax barrier type.

. In the supplementary display type, 3D imagery may be implemented using a subsidiary device as a viewing device (not shown), in addition to the display 180. Examples of the supplementary display type may include various types such as a head-mounted display (HMD) type and a glasses type.

. The glasses type may be divided into a passive type such as a polarized glasses type and an active type such as a shutter glasses type. The HMD type may be divided into a passive type and an active type.

. The viewing device (not shown) may be 3D glasses that enable 3D image viewing. The 3D glasses (not shown) may be passive-type polarized glasses or active-type shutter glasses. The 3D glasses may also be understood as conceptually including the HMD type.

. The display 180 may include a touchscreen and may function as an input device as well as an output device.

. The audio output device 185 receives an audio signal processed by the signal processing device 170 and outputs audio.

. A capture device (not shown) captures an image of the user. The capture device (not shown) may be implemented using one camera. However, embodiments of the present disclosure are not limited thereto and the capture device (not shown) may be implemented using a plurality of cameras. The capture device (not shown) may be buried in the upper portion of the display 180 of the image display apparatus 100 or may be separately disposed. Information about the image captured by the capture device (not shown) may be input to the signal processing device 170.

. The signal processing device 170 may sense user gestures based on the image captured by the capture device (not shown), the signal sensed by the sensor device (not shown), or a combination thereof.

. The power supply 190 supplies power to overall parts of the image display apparatus 100. In particular, the power supply 190 may supply power to the signal processing device 170, which may be implemented in the form of system-on-chip (SOC), the display 180 for displaying images, and the audio output device 185 for outputting audio signals.

. Specifically, the power supply 190 may include a converter for converting alternating current (AC) power into direct current (DC) power and a DC-DC converter for changing the level of the DC power.

. The remote control device 200 transmits a user input signal to the user input interface 150. To this end, the remote control device 200 may use Bluetooth, RF communication, infrared (IR) communication, ultra-wideband (UWB), or ZigBee. In addition, the remote control device 200 may be configured to receive an image signal, an audio signal, or a data signal from the user input interface 150 and then display or audibly output the received signal.

. The image display apparatus 100 may be a fixed or mobile digital broadcast receiver capable of receiving a digital broadcast.

. FIG. 2 is a block diagram of the image display apparatus 100 according to an embodiment of the present disclosure. Some of the constituents of the image display apparatus shown in the diagram may be combined or omitted or other constituents may be added thereto, according to specifications of the image display apparatus 100 as actually implemented. That is, two or more constituents of the image display apparatus 100 may be combined into one constituent or one constituent thereof may be subdivided into two or more constituents, as needed. In addition, a function performed in each block is simply illustrative.

. Meanwhile, the image display apparatus 100 may not include the tuner 110 and the demodulator 120 as opposed to FIG. 2. Instead, the image display apparatus 100 may be configured to receive and reproduce image content through the network interface 135 or the external device interface 130.

. The image display apparatus 100 is an exemplary image signal processing apparatus for processing signals of images stored therein or signals of input images. Another example of the image signal processing apparatus may be the above-described set-top box, DVD player, Blu-ray player, game console, or computer except for the display 180 and the audio output device 185 shown in FIG. 2.

. FIG. 3 is an internal block diagram of the controller shown in FIG. 2.

. Referring to figure 3, the signal processing device 170 according to an embodiment of the present disclosure may include a demultiplexer 310, an image processor 320, a processor 330, an OSD generator 340, a mixer 345, a frame rate converter 350, and a formatter 360. The signal processing device 170 may further include an audio processor (not shown) and a data processor (not shown).

. The demultiplexer 310 demultiplexes an input TS signal. For example, in case in which an MPEG-2 TS signal is input, the demultiplexer 310 may demultiplex the MPEG-2 TS signal into an image signal, an audio signal, and a data signal. Herein, the TS signal input to the demultiplexer 310 may be a TS signal output from the tuner 110, the demodulator 120, or the external device interface 130.

. The image processor 320 may be configured to perform image processing on the demultiplexed image signal. To this end, the image processor 320 may include an image decoder 325 and a scaler 335.

. The image decoder 325 decodes the demultiplexed image signal and the scaler 335 scales the resolution of the decoded image signal for outputting the image signal through the display 180.

. The image decoder 325 may include various types of decoders.

. The image signal decoded by the image processor 320 may include a 2D image signal alone, a mixture of a 2D image signal and a 3D image signal, or a 3D image signal alone.

. For example, an external image signal received from an external device or a broadcast image signal of a broadcast signal received through the tuner 110 may include the 2D image signal alone, a mixture of the 2D image signal and the 3D image signal, or the 3D image signal alone. Accordingly, the signal processing device 170, more specifically, the image processor 320, may be configured to perform signal processing upon the external image signal or the broadcast image signal to output the 2D image signal, a mixture of the 2D image signal and the 3D image signal, or the 3D image signal.

. The image signal decoded by the image processor 320 may include a 3D image signal in various formats. For example, the decoded image signal may be a 3D image signal that includes a color difference image and a depth image or a 3D image signal that includes multi-viewpoint image signals. The multi-viewpoint image signals may include a left-eye image signal and a right-eye image signal, for example.

. The formats of the 3D image signal may include a side-by-side format in which the left-eye image L and the right-eye image R are arranged in a horizontal direction, a top/down format in which the left-eye image and the right-eye image are arranged in a vertical direction, a frame sequential format in which the left-eye image and the right-eye image are arranged in a time division manner, an interlaced format in which the left-eye image and the right-eye image are mixed in lines, and a checker box format in which the left-eye image and the right-eye image are mixed in each box.

. The processor 330 may control overall operation of the image display apparatus 100 or the signal processing device 170. For example, the processor 330 may control the tuner 110 to tune to an RF broadcasting corresponding to a channel selected by the user or a prestored channel.

. In addition, the processor 330 may control the image display apparatus 100 according to a user command input through the user input interface 150 or according to an internal program.

. The processor 330 may control data transmission to the network interface 135 or the external device interface 130.

. The processor 330 may control operations of the demultiplexer 310, image processor 320 and OSD generator 340 in the signal processing device 170.

. The OSD generator 340 generates an OSD signal autonomously or according to a user input signal. For example, the OSD generator 340 may generate a signal for displaying a variety of information in the form of graphics or texts on the screen of the display 180 based on a user input signal. The generated OSD signal may include a variety of data such as a user interface screen, various menu screens, a widget, and an icon of the image display apparatus 100. The generated OSD signal may also include a 2D object or a 3D object.

. The OSD generator 340 may generate a pointer which can be displayed on the display, based on a pointing signal input from the remote control device 200. In particular, the pointer may be generated by a pointing signal processor (not shown) and the OSD generator 240 may include the pointing signal generator (not shown). Obviously, it is possible to provide the pointing signal processor (not shown) separately from the OSD generator 240.

. The mixer 345 may mix the OSD signal generated by the OSD generator 340 with the image signal decoded by the image processor 320. Each of the OSD signal and the decoded image signal may include at least one of a 2D signal or a 3D signal. The mixed image signal is provided to the frame rate converter 350.

. The frame rate converter (FRC) 350 may convert the frame rate of an input image. The FRC 350 may also directly output the input image without frame rate conversion.

. The formatter 360 may arrange a left-eye image frame and right-eye image frame of the 3D image produced through frame rate conversion. The formatter 360 may output a synchronization signal Vsync to open a left-eye glass or right-eye glass of a 3D viewing apparatus (not shown).

. The formatter 360 may be configured to receive the mixed signal, i.e., a mixture of the OSD signal and the decoded image signal, from the mixer 345 and separate the mixed signal into a 2D image signal and a 3D image signal.

. The formatter 360 may change the format of the 3D image signal. For example, the formatter 360 may change the format of the 3D image signal to any of the various formats described above.

. The formatter 360 may convert the 2D image signal into the 3D image signal. For example, the formatter 360 may detect an edge or a selectable object in the 2D image signal and separate and generate an object according to the detected edge or the selectable object as the 3D image signal, based on a 3D image generation algorithm. In this case, the generated 3D image signal may be separated into the left-eye image signal L and the right-eye image signal R to be aligned, as described above.

. Although not shown in the figure, a 3D processor (not shown) for 3-D effect signal processing may be further disposed after the formatter 360. The 3D processor (not shown) may be configured to perform processing such as adjustment of brightness, tint, and color of an image signal to improve a 3D effect. For example, the 3D processor may be configured to perform signal processing of making parts at a close distance clear and making parts at a far distance blurry. Such functions of the 3D processor may be integrated into the formatter 360 or the image processor 320.

. An audio processor (not shown) in the signal processing device 170 may process the demultiplexed audio signal. To this end, the audio processor (not shown) may include various decoders.

. The audio processor (not shown) in the signal processing device 170 may be configured to perform processing such as adjustment of bass, treble, and volume.

. The data processor (not shown) in the signal processing device 170 may be configured to perform data processing on the demultiplexed data signal. For example, if the demultiplexed data signal is a coded data signal, the data processor (not shown) may decode the data signal. The coded data signal may be EPG information containing broadcast information such as a start time and end time of a broadcast program broadcast on each channel.

. Although the formatter 360 performs 3D processing after the mixer 345 mixes the signals received from the OSD generator 340 and the image processor 320 in FIG. 3, embodiments of the present disclosure are not limited thereto and the mixer 345 may be disposed after the formatter 360. That is, after the formatter 360 performs 3D processing on the output of the image processor 320 and the OSD generator 340 generates the OSD signal and performs 3D processing, the mixer 345 may mix the 3D processed signals.

. The block diagram of the signal processing device 170 shown in FIG. 3 is simply illustrative. Constituents of the block diagram may be integrated, added or omitted according to the specifications of the signal processing device 170 as actually implemented.

. In particular, the frame rate converter 350 and the formatter 360 may not be provided in the signal processing device 170. Instead, they may be provided individually or provided as one separate module.

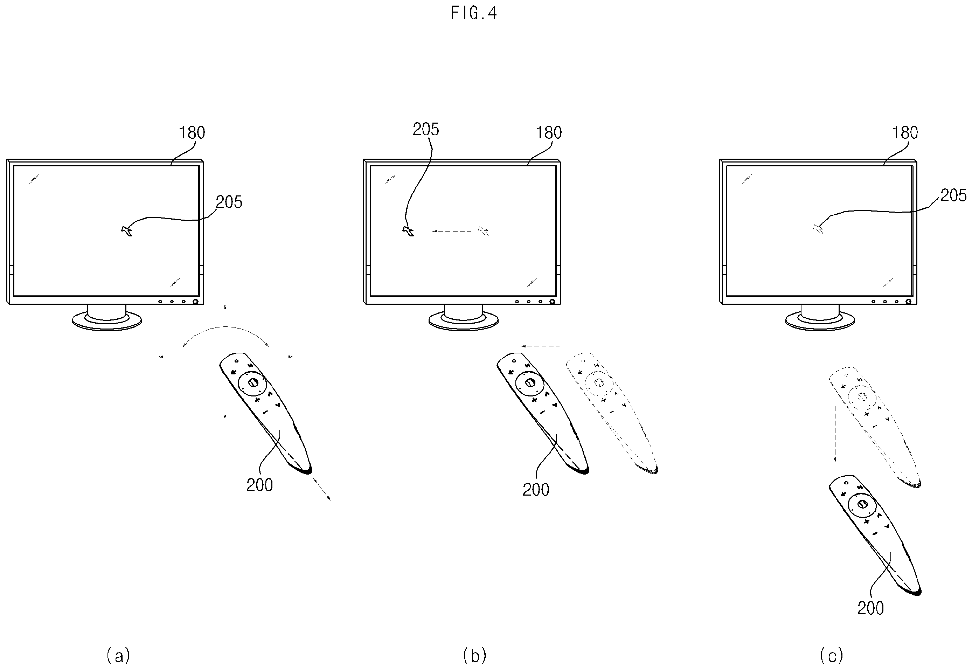

. FIG. 4 is a view illustrating a method of controlling the remote control device shown in FIG. 2.

. As shown in FIG. 4(a), a pointer 205 corresponding to the remote control device 200 may be displayed on the display 180.

. A user may move the remote control device 200 up and down, left and right (FIG. 4(b)), or back and forth (FIG. 4(c)) or rotate the same. The pointer 205 displayed on the display 180 of the image display apparatus moves according to movement of the remote control device 200. As shown in the figure, since the pointer 205 moves according to movement of the remote control device 200 in a 3D space, the remote control device 200 may be referred to as a spatial remote control device or a 3D pointing device.

. FIG. 4(b) illustrates a case in which the pointer 205 displayed on the display 180 moves to the left in case in which the user moves the remote control device 200 to the left.

. Information about movement of the remote control device 200 sensed through a sensor of the remote control device 200 is transmitted to the image display apparatus. The image display apparatus may calculate coordinates of the pointer 205 based on the information about the movement of the remote control device 200. The image display apparatus may display the pointer 205 such that the pointer 205 corresponds to the calculated coordinates.

. FIG. 4(c) illustrates a case in which the user moves the remote control device 200 away from display 180 while pressing down a specific button on the remote control device 200. In this case, a selected area on the display 180 corresponding to the pointer 205 may be zoomed in and displayed with a magnified size. On the contrary, in case in which the user moves the remote control device 200 closer to the display 180, the selected area may be zoomed out and displayed with a reduced size. Alternatively, the selected area may be zoomed out in case in which the remote control device 200 is moved away from the display 180 and may be zoomed in in case in which the remote control device 200 is moved closer to the display 180.

. Up-and-down and left-and-right movements of the remote control device 200 may not be recognized while the specific button on the remote control device 200 is pressed down. That is, in case in which the remote control device 200 moves away from the display 180 or approaches the display 180, the up-and-down and left-and-right movements of the remote control device 200 may not be recognized and only a back-and-forth movement of the remote control device 200 may be recognized. If the specific button on the remote control device 200 is not pressed down, only the pointer 205 moves according to the up-and-down and left-and-right movements of the remote control device 200.

. The speed and direction of movement of the pointer 205 may correspond to the speed and direction of movement of the remote control device 200.

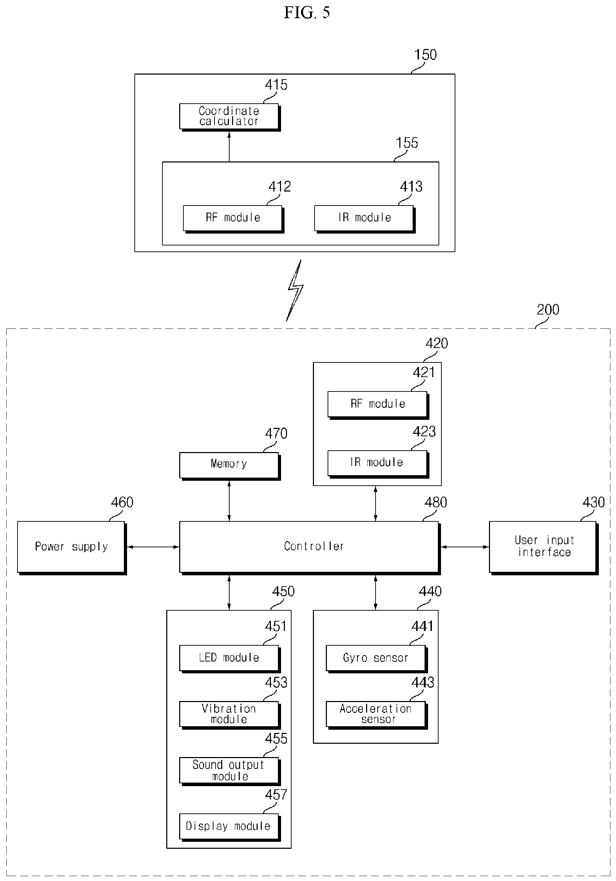

. FIG. 5 is an internal block diagram of the remote control device shown in FIG. 2.

. Referring to FIG. 5, the remote control device 200 may include a wireless transceiver 420, a user input interface 430, a sensor device 440, an output device 450, a power supply 460, a memory 470, and a controller 480.

. The wireless transceiver 420 transmits and receives signals to and from one of the image display apparatuses according to embodiments of the present disclosure described above. Hereinafter, one image display apparatus 100 among the image display apparatuses according to embodiments of the present disclosure will be described by way of example.

. In this embodiment, the wireless transceiver 420 may include an RF module 421 capable of transmitting and receiving signals to and from the image display apparatus 100 according to an RF communication standard. The wireless transceiver 420 may further include an IR module 423 capable of transmitting and receiving signals to and from the image display apparatus 100 according to an IR communication standard.

. In this embodiment, the remote control device 200 transmits a signal containing information about movement of the remote control device 200 to the image display apparatus 100 via the RF module 421.

. In addition, the remote control device 200 may be configured to receive a signal from the image display apparatus 100 via the RF module 421. As needed, the remote control device 200 may transmit commands related to power on/off, channel change, and volume change to the image display apparatus 100 via the IR module 423.

. The user input interface 430 may include a keypad, buttons, a touchpad, or a touchscreen. The user may input a command related to the display apparatus 100 to the remote control device 200 by manipulating the user input interface 430. If the user input interface 430 includes a hard key button, the user may input a command related to the image display apparatus 100 to the remote control device 200 by pressing the hard key button. If the user input interface 430 includes a touchscreen, the user may input a command related to the image display apparatus 100 to the remote control device 200 by touching a soft key on the touchscreen. The user input interface 430 may include various types of input means such as a scroll key and a jog key which can be manipulated by the user and this embodiment does not limit the scope of the present disclosure.

. The sensor device 440 may include a gyro sensor 441 or an acceleration sensor 443. The gyro sensor 441 may sense information about movement of the remote control device 200.

. For example, the gyro sensor 441 may sense information about movement of the remote control device 200 with respect to the X, Y and Z axes. The acceleration sensor 443 may sense information about the movement speed of the remote control device 200. The sensor device 440 may further include a distance measurement sensor to sense a distance to the display 180.

. The output device 450 may output an image signal or audio signal corresponding to manipulation of the user input interface 435 or the signal transmitted by the image display apparatus 100. The user may recognize, via the output device 450, whether the user input interface 435 is manipulated or the image display apparatus 100 is controlled.

. For example, the output device 450 may include an LED module 451 to be turned on, a vibration module 453 to generate vibration, a sound output module 455 to output sound, or a display module 457 to output an image, in case in which the user input interface 435 is manipulated or signals are transmitted to and received from the image display apparatus 100 via the wireless transceiver 425.

. The power supply 460 supplies power to the remote control device 200. If the remote control device 200 does not move for a predetermined time, the power supply 460 may stop supplying power to reduce waste of power. The power supply 460 may resume supply of power in case in which a predetermined key provided to the remote control device 200 is manipulated.

. The memory 470 may store various types of programs and application data necessary for control or operation of the remote control device 200. In case in which the remote control device 200 wirelessly transmits and receives signals to and from the image display apparatus 100 via the RF module 421, the remote control device 200 and the image display apparatus 100 may transmit and receive signals in a predetermined frequency band. The controller 480 of the remote control device 200 may store, in the memory 470, information about a frequency band enabling wireless transmission and reception of signals to and from the image display apparatus 100 which is paired with the remote control device 200, and reference the information.

. The controller 480 controls overall operation related to control of the remote control device 200. The controller 480 may transmit a signal corresponding to manipulation of a predetermined key in the user input interface 435 or a signal corresponding to movement of the remote control device 200 sensed by the sensor device 440 to the image display apparatus 100 via the wireless transceiver 425.

. The user input interface 150 of the image display apparatus 100 may include a wireless transceiver 151 capable of wirelessly transmitting and receiving signals to and from the remote control device 200 and a coordinate calculator 415 capable of calculating coordinate values of a pointer corresponding to operation of the remote control device 200.

. The user input interface 150 may wirelessly transmit/receive signals to/from the remote control device 200 through an RF module 412 in the wireless communication device 155. Further, the user input interface 150 may be configured to receive a signal transmitted by the remote control device 200 according to an IR communication standard through an IR module 413 in the communication device 155.

. The coordinate calculator 415 may calculate a coordinate value (x, y) of the pointer 205 to be displayed on the display 180 by correcting hand shaking or errors in a signal corresponding to operation of the remote control device 200, which is received via the wireless transceiver 411.

. The signal which is transmitted by the remote control device 200 and input to the image display apparatus 100 via the user input interface 150 is transmitted to the signal processing device 170 of the image display apparatus 100. The signal processing device 170 may determine information about an operation of the remote control device 200 or manipulation of a key from the signal transmitted by the remote control device 200 and control the image display apparatus 100 based on the information.

. As another example, the remote control device 200 may calculate a coordinate value of a pointer corresponding to movement thereof and output the coordinate value to the user input interface 150 of the image display apparatus 100. In this case, the user input interface 150 of the image display apparatus 100 may transmit, to the signal processing device 170, information about the received coordinate value of the pointer without separately correcting hand tremor or errors.

. As another example, the coordinate calculator 415 may be provided in the signal processing device 170 rather than in the user input interface 150 as opposed to FIG. 5.

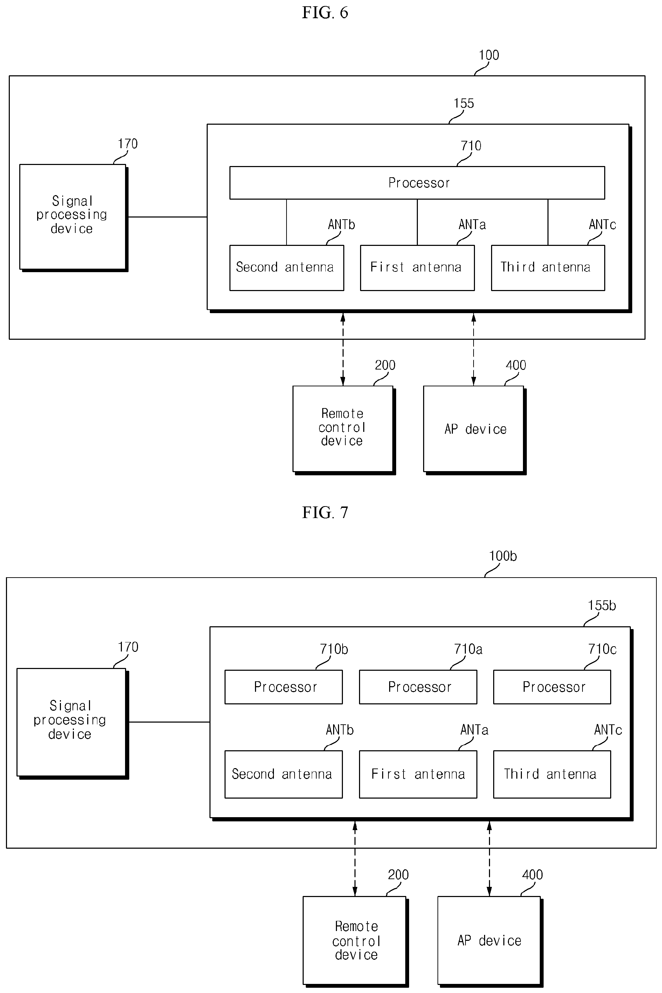

. FIG. 6 is an example of an internal block diagram of a wireless communication device according to an embodiment of the present disclosure.

. Referring to the figure, the wireless communication device 155 according to an embodiment of the present disclosure includes a first antenna ANTa configured to receive or transmit a wireless signal of the first frequency band, a second antenna ANTb configured to receive or transmit a wireless signal of the second frequency band, a third antenna ANTc configured to receive or transmit a wireless signal of the third frequency band, and a processor 710 configured to process a signal from the first antenna ANTa, the second antenna ANTb, or the third antenna ANTc and process the signal or transmit a processed signal to the first antenna ANTa, the second antenna ANTb, or the third antenna ANTc.

. The first antenna ANTa may be configured to receive or transmit a wireless signal of the first frequency band from/to the remote control device 200, the mobile terminal 600, or the access point device 400. For example, the first frequency band may be the frequency band of 2.4 GHz.

. The second antenna ANTb may be configured to receive or transmit a wireless signal of the second frequency band from/to the remote control device 200, the mobile terminal 600, or the access point device 400. For example, the second frequency band may be the frequency band of 5 GHz.

. The third antenna ANTc may be configured to receive or transmit a wireless signal of the third frequency band from/to the remote control device 200, the mobile terminal 600, or the access point device 400. For example, the third frequency band may be the frequency band of 6 GHz.

. For example, the wireless communication device 155 may be configured to perform wireless communication based on WI-FI or WI-FI6. Accordingly, the wireless communication device 155 may utilize a frequency band of approximately 2.4 GHz and 5 GHz dual band by using the first antenna ANTa and the second antenna ANTb when performing wireless communication based on WI-FI6.

. In another example, the wireless communication device 155 may be configured to perform wireless communication based on WI-FI6E. Accordingly, the wireless communication device 155 may utilize a frequency band of approximately 2.4 GHz, 5 GHz, and 6 GHz by using the first antenna ANTa, the second antenna ANTb, and the third antenna ANTc when performing wireless communication based on WI-FI6E.

. In other words, the wireless communication device 155 may be configured to receive data based on any one of the frequency bands of 2.4 GHz, 5 GHz, and 6 GHz. Accordingly, it is possible to efficiently perform wireless communication.

. Meanwhile, the wireless communication device 155 may be configured to receive data based on a bandwidth of 20 MHz, 40 MHz, 80 MHz, or 160 MHz. Accordingly, it is possible to efficiently perform wireless communication.

. In yet another example, the wireless communication device 155 may be configured to perform wireless communication based on Bluetooth communication. Accordingly, the wireless communication device 155 may utilize the frequency band of approximately 2.4 GHz by using the first antenna ANTa when performing wireless communication based on Bluetooth communication.

. Meanwhile, the processor 710 may be configured to scan a beacon frame through one of the first antenna ANTa to the third antenna ANTc; in response to the beacon frame being not received within a predetermined period of time, set wireless channel and wireless transmission power based on the country code information stored in the memory 140; in response to the beacon frame being received within the predetermined period of time, extracts the country code information in the beacon frame; and set the wireless channel and wireless transmission power based on the extracted country code information. Accordingly, it is possible to efficiently perform wireless communication.

. FIG. 7 is another example of an internal block diagram of a wireless communication device according to an embodiment of the present disclosure.

. Referring to the figure, the wireless communication device 155b of FIG. 7 is similar to the wireless communication device 155 of FIG. 6 but differs from the wireless communication device 155 in that the wireless communication device 155b includes three processors 710a, 710b, 710c instead of one processor 710.

. The first processor 710a may be electrically connected to the first antenna ANTa to receive and process a signal from the first antenna ANTa or transmit a processed signal to the first antenna ANTa.

. The second processor 710b may be configured to receive and process a signal from the second antenna ANTb or transmit a processed signal to the second antenna ANTb.

. Meanwhile, the third processor 710c may be configured to receive and process a signal from the third antenna ANTc or transmit a processed signal to the third antenna ANTc.

. The wireless communication device 155b of FIG. 7 may be configured to receive data based on any one of the frequency bands of 4 GHz, 5 GHz, and 6 GHz. Accordingly, it is possible to efficiently perform wireless communication.

. The wireless communication device 155b of FIG. 7 may be configured to receive data based on a bandwidth of 20 MHz, 40 MHz, 80 MHz, or 160 MHz. Accordingly, it is possible to efficiently perform wireless communication.

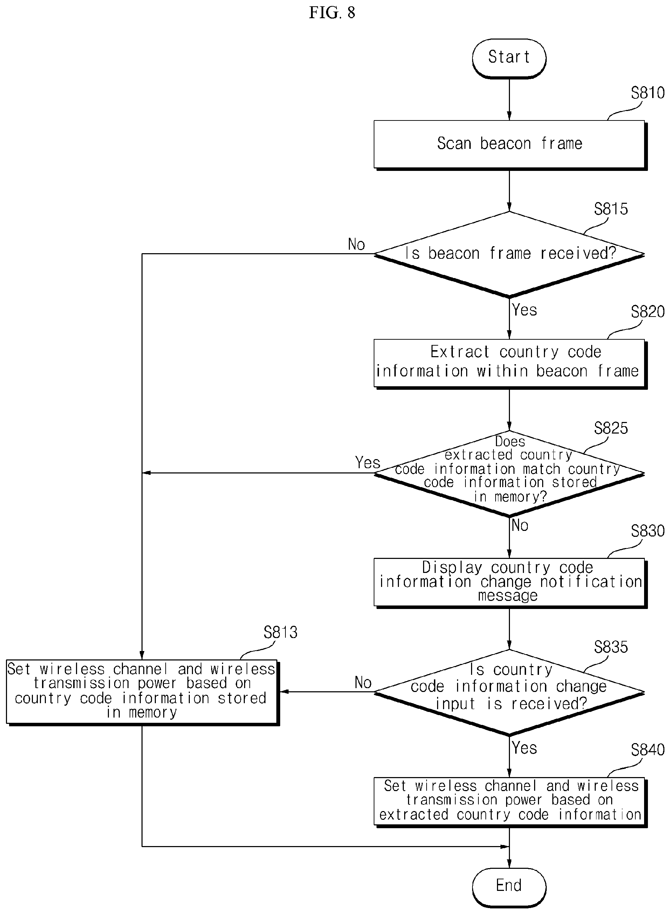

. FIG. 8 is a flowchart illustrating a method of operating a wireless communication device according to an embodiment of the present disclosure.

. Referring to the figure, the wireless communication device 155 according to an embodiment of the present disclosure may be configured to scan a beacon frame after being activated S810.

. At this time, the beacon frame may be a beacon frame coming from an adjacent access point device 400.

. For example, the adjacent access point device 400 may be configured to periodically transmit beacon frames for wireless communication access. Accordingly, the wireless communication device 155 may be configured to scan and receive a beacon frame after being activated.

. Meanwhile, the wireless communication device 155 may be configured to determine whether a beacon frame is received within a predetermined period of time S815 and in response to a beacon frame being not received within the predetermined period of time, set wireless channel and wireless transmission power based on the country code information stored in the memory 140 S813.

. Meanwhile, if a beacon frame is received within the predetermined period of time, the wireless communication device 155 may be configured to extract the country code information within the beacon frame S820.

. Then, the wireless communication device 155 may be configured to determine whether the extracted country code information matches the country code information stored in the memory 140 S825; in response to the extracted country code information matching the country code information stored in the memory, set wireless channel and wireless transmission power based on the extracted country code information or the country code information stored in the memory 140. Accordingly, it is possible to efficiently perform wireless communication.

. Meanwhile, in response to the extracted country code information not matching the country code information stored in the memory 140, the signal processing device 170 may be configured to display a country code information change notification message S830.

. The country code information change notification message may include a message 1110 indicating a mismatch of the country code information and the country code information change message 1115.

. Next, the signal processing device 170 may be configured to determine whether a country code information change input is received according to an input signal S835 and if the country code information change input is received, may be configured to set wireless channel and wireless transmission power based on the extracted country code information S840.

. In other words, in response to a selection input for the extracted country code information while the extracted country code information does not match the country code information stored in the memory 140, the wireless communication device 155 may be configured to set wireless channel and wireless transmission power based on the extracted country code information. Accordingly, it is possible to efficiently perform wireless communication.

. Meanwhile, if a selection input for the country code information stored in the memory 140 is provided while the extracted country code information does not match the country code information stored in the memory 140, the wireless communication device 155 may be configured to set wireless channel and wireless transmission power based on the country code information stored in the memory 140. Accordingly, it is possible to efficiently perform wireless communication.

. Meanwhile, the wireless communication device 155 may be configured to perform wireless communication with an adjacent access point device 400 based on the set wireless channel and wireless transmission power, and the signal processing device 170 may be configured to connect to a server through the access point device 400 and display an image corresponding to image data received from the server on the display. Accordingly, images received based on wireless communication may be displayed in a stable manner.

. Meanwhile, if a packet error rate of a wireless signal received from the access point device 400 is greater than or equal to a predetermined threshold, the wireless communication device 155 may be configured to perform channel change. Accordingly, it is possible to efficiently perform wireless communication.

. Meanwhile, if channel change based on the packet error rate of a wireless signal received from the access point device 400 is performed more than a reference number of times, scanning of the beacon frame may be performed again. Accordingly, it is possible to efficiently perform wireless communication.

. Meanwhile, scanning of a beacon frame of FIG. 8 may be performed if the access point device 400 being not registered or a wireless signal is received from an access point device 400 having a network address different from a network address of a registered access point device 400.

. For example, the wireless communication device 155 may be configured to scan a beacon frame if the access point device 400 being not registered or a wireless signal is received from an access point device 400 having a network address different from a network address of a registered access point device 400.

. The wireless communication device 155 may be configured to set wireless channel and wireless transmission power based on country code information stored in the memory 140 in response to the beacon frame being not received within a predetermined period of time and extract country code information within the beacon frame and set wireless channel and wireless transmission power based on the extracted country code information in response to the beacon frame being received within the predetermined period of time. Accordingly, it is possible to efficiently perform wireless communication.

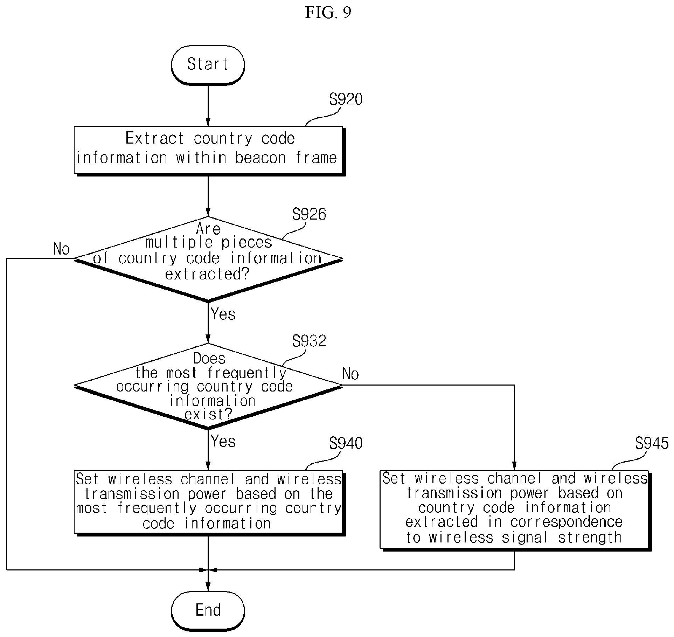

. FIG. 9 is a flowchart illustrating a method of operating a wireless communication device according to an embodiment of the present disclosure.

. Referring to the figure, the wireless communication device 155 within the image display apparatus 100 according to an embodiment of the present disclosure may be configured to scan a beacon frame after being activated and receive a beacon frame from an adjacent access point device.

. Then, if a beacon frame is received within a predetermined period of time, the wireless communication device 155 may be configured to extract country code information within the beacon frame S920.

. Meanwhile, if a plurality of access point devices are present around the image display apparatus 100 and beacon frames are received from the plurality of access point devices, there may be multiple pieces of country code information.

. The wireless communication device 155 may be configured to determine whether multiple pieces of country code information are extracted S926; if multiple pieces of country code information are extracted, the wireless communication device 155 may be configured to check whether the most frequently occurring country code information exists among the extracted multiple pieces of country code information S932.

. If the most frequently occurring country code information exists among the extracted multiple pieces of country code information, the wireless communication device 155 may be configured to set wireless channel and wireless transmission power based on the most frequently occurring country code information S940. Accordingly, it is possible to efficiently perform wireless communication.

. For example, if the extracted multiple pieces of country code information comprise two for Korea and one for the United States, the wireless communication device 155 may be configured to set wireless channel and wireless transmission power based on the country code information of Korea. Accordingly, since wireless channel and wireless transmission power may be set according to the specifications relevant to Korea, it is possible to efficiently perform wireless communication.

. Meanwhile, in the S932 step, if the most frequently occurring country code information does not exist among the extracted multiple pieces of country code information, the wireless communication device 155 may be configured to set wireless channel and wireless transmission power based on the country code information corresponding to the beacon frame exhibiting the strongest signal strength S945. Accordingly, it is possible to efficiently perform wireless communication.

. For example, if the extracted multiple country code information comprise two for Korea and two for United States, the wireless communication device 155 may be configured to select the country code information exhibiting the highest Receiver Signal Strength Indicator (RSSI) value, which represents the strength of a wireless signal.

. Specifically, if the extracted multiple pieces of country code information include two for Korea and two for the United States, and the Receiver Signal Strength Indicator (RSSI) value, which represents the strength of a wireless signal, is largest for the United States, wireless channel and wireless transmission power may be set based on the country code information of the United States. Accordingly, since wireless channel and wireless transmission power may be set according to the specifications relevant to the United States, it is possible to efficiently perform wireless communication.

. Meanwhile, the wireless communication device 155 according to another embodiment of the present disclosure may be configured to set wireless channel and wireless transmission power based on the selected country code information if the country code information in the beacon frame received from the adjacent access point device 400 does not match the country code information in the memory 140. Accordingly, wireless communication can be performed efficiently.

. Meanwhile, in response to a plurality of beacon frames being received from a plurality of adjacent access point devices 400, the wireless communication device 155 may be configured to extract country code information within each of the plurality of beacon frames and set wireless channel and wireless transmission power based on the most frequently occurring country code information among the plurality of extracted pieces of country code information. Accordingly, it is possible to efficiently perform wireless communication.

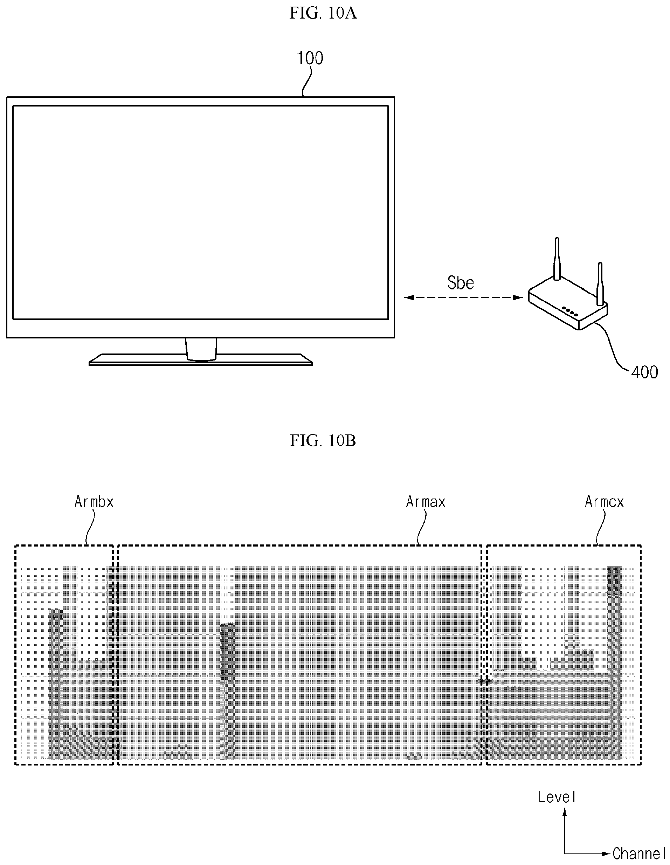

. FIGS. 10A to 12B are views referred to in description of FIG. 8 or 9.

. FIG. 10A illustrates a situation where the wireless communication device 155 within the image display apparatus 100 may be configured to scan a beacon frame and receives a beacon frame Sbe from an adjacent access point device 400.

. If a beacon frame is received within a predetermined period of time, the wireless communication device 155 may be configured to extract country code information within the beacon frame, and if the extracted country code matches the country code information in the memory 140, set wireless channel and wireless transmission power based on the extracted country code information or the country code information stored in the memory 140.

. FIG. 10B illustrates a wireless channel set based on the country code information stored in the memory 140.

. Referring to the figure, a plurality of channels are present within the frequency band, and each frequency channel may be in a different state.

. Among the frequency channels within the frequency band, the frequency channel in the central region Armax may lack channel margin due to the influence of power of surrounding wireless signals.

. Meanwhile, the two side regions Armbx, Armcx excluding the central region Armax among the frequency channels within the frequency band may have some degree of channel margin.

. The wireless communication device 155 may be configured to set the corresponding channel between the two side regions Armbx, Armcx of FIG. 10B as the wireless channel and set the wireless transmission power based on the country code information stored in the memory 140.

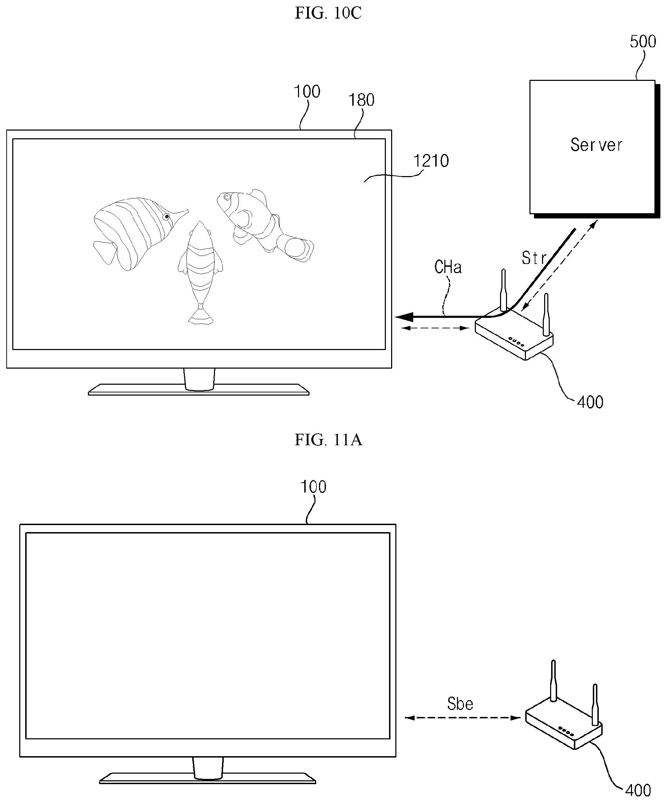

. FIG. 10C illustrates an example in which the wireless communication device 155 within the image display apparatus 100 connects to the server 500 via the access point device 400 through the first wireless channel CHa set based on the country code information stored in the memory 140.

. Referring to the figure, the wireless communication device 155 within the image display apparatus 100 may be configured to receive image data Str from the server 500, and the signal processing device 170 may be configured to display the image 1210 corresponding to the image data received from the server 500 on the display 180. Accordingly, the image received based on wireless communication may be displayed in a stable manner.

. FIG. 11A illustrates an example in which the wireless communication device 155 within the image display apparatus 100 may be configured to scan a beacon frame and receives a beacon frame Sbe from an adjacent access point device 400.

. When a beacon frame is received within a predetermined period of time, the wireless communication device 155 may be configured to extract country code information in the beacon frame.

. Meanwhile, the signal processing device 170 may be configured to display controls a country code information change notification message in response to the extracted country code information not matching the country code information stored in the memory 140.

. The country code information change notification message may include a message 1110 indicating a mismatch of the country code information and the country code information change message 1115.

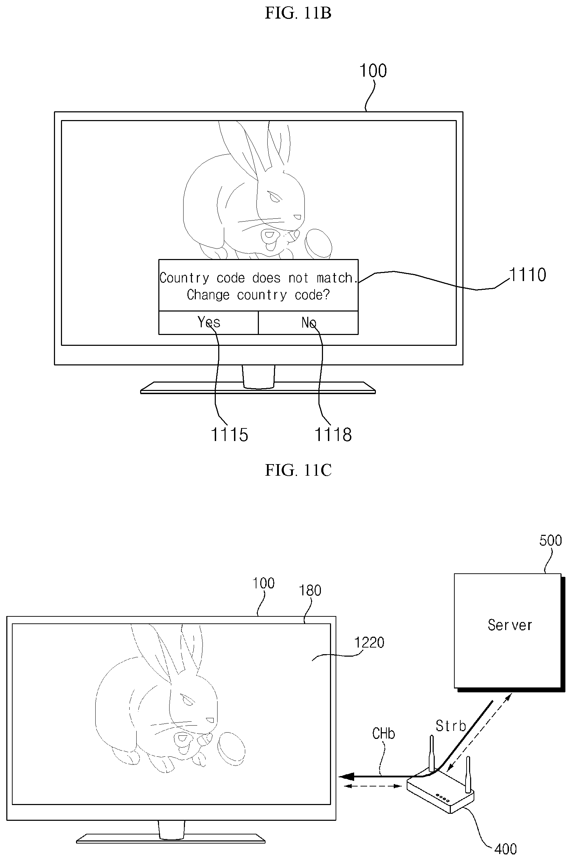

. FIG. 11B illustrates an example in which a message 1110 indicating a mismatch of country code information and a country code information change message including a code change agreement option 1115 and a code change disagreement option 1118 are displayed on the display 180 of the image display apparatus 100.

. For example, if the code change agreement option 1115 is selected based on an input signal of the remote control device 200, i.e., in response to a selection input for the extracted country code information, wireless channel and wireless transmission power may be set based on the extracted country code information. Accordingly, it is possible to efficiently perform wireless communication.

. In another example, if the code change disagreement option 1118 is selected based on an input signal of the remote control device 200, i.e., if a selection input for the country code information stored in the memory 140 is provided, wireless channel and wireless transmission power may be set based on the country code information stored in the memory 140. Accordingly, it is possible to efficiently perform wireless communication.

. FIG. 11C illustrates an example in which the wireless communication device 155 within the image display apparatus 100 connects to the server 500 via the access point device 400 through the second wireless channel CHb set based on the extracted country code information.

. Referring to the figure, the wireless communication device 155 within the image display apparatus 155 may be configured to receive image data Strb from the server 500, and the signal processing device 170 may be configured to display the image 1220 corresponding to the image data received from the server 500 on the display 180. Accordingly, the image received based on wireless communication may be displayed in a stable manner.

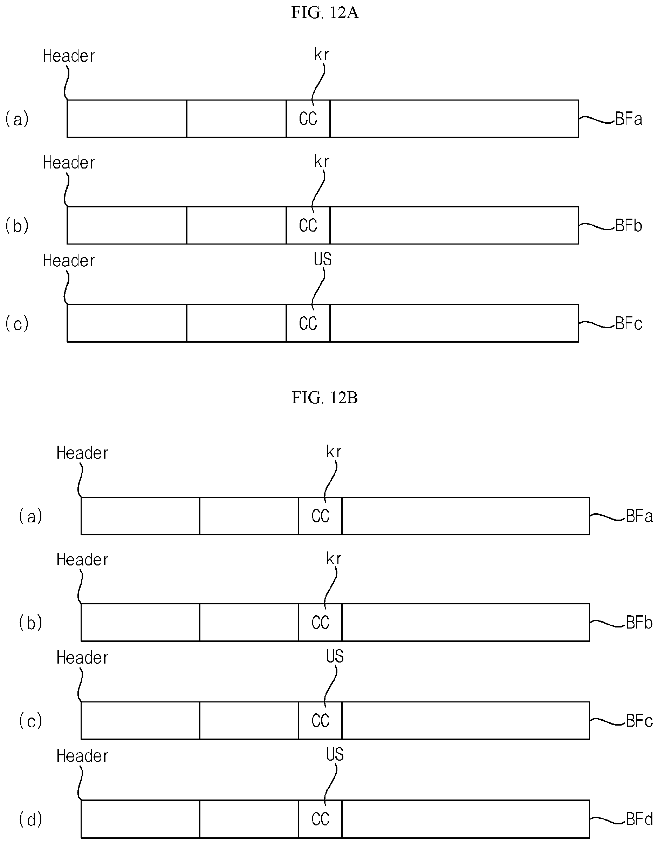

. FIG. 12A illustrates an example in which multiple pieces of country code information are extracted.

. Referring to the figure, the wireless communication device 155 receives beacon frames from a plurality of adjacent access point devices.

. FIG. 12A(a) illustrates a first beacon frame BFa including a header and country code information kr, FIG. 12A(b) illustrates a second beacon frame including a header and country code information kr, and FIG. 12A(c) illustrates a third beacon frame including a header and country code information us.

. If the most frequently occurring country code information exists among the extracted multiple pieces of country code information, the wireless communication device 155 may be configured to set wireless channel and wireless transmission power based on the most frequently occurring country code information.

. As shown in the figure, if the extracted multiple pieces of country code information comprise two for Korea and one for the United States, the wireless communication device 155 may be configured to set wireless channel and wireless transmission power based on the country code information of Korea. Accordingly, since wireless channel and wireless transmission power may be set according to the specifications relevant to Korea, it is possible to efficiently perform wireless communication.

. FIG. 12B illustrates another example in which multiple pieces of country code information are extracted.

. FIG. 12B(a) illustrates a first beacon frame BFa including a header and country code information kr, FIG. 12B(b) illustrates a second beacon frame BFb including a header and country code information kr, FIG. 12B(c) illustrates a third beacon frame BFc including a header and country code information us, and FIG. 12B(d) illustrates a fourth beacon frame BFd including a header and country code information us.

. If the most frequently occurring country code information does not exist among the extracted multiple pieces of country code information, the wireless communication device 155 may be configured to set wireless channel and wireless transmission power based on the country code information corresponding to the beacon frame exhibiting the strongest signal strength.

. As shown in the figure, if the extracted multiple pieces of country code information include two for Korea and two for the United States, and the Receiver Signal Strength Indicator (RSSI) value, which represents the strength of a wireless signal, is largest for the fourth beacon frame BFd, wireless channel and wireless transmission power may be set based on the country code information of the United States included in the fourth beacon frame. Accordingly, since wireless channel and wireless transmission power may be set according to the specifications relevant to the United States, it is possible to efficiently perform wireless communication.

## Claims

1. An image display apparatus (100) comprising:
a display (180);
a memory (140) configured to store country code information;
a signal processing device (170) configured to output an image signal to the display; and
a wireless communication device (155) configured to perform wireless communication with an external device,
wherein the wireless communication device (155) is configured to:
scan a beacon frame in response to an access point device being not registered or a wireless signal being received from an access point device having a network address different from a network address of a registered access point device,
set wireless channel and wireless transmission power based on the country code information stored in the memory in response to a beacon frame being not received within a predetermined period, and
in response to the beacon frame being received within the predetermined period, extract the country code information within the beacon frame and set wireless channel and wireless transmission power based on the extracted country code information.

2. The apparatus of claim 1, wherein, in response to the extracted country code information matching the country code information stored in the memory, the wireless communication device (155) is configured to set wireless channel and wireless transmission power based on the extracted country code information.

3. The apparatus of any one of claims 1 to 2, wherein, in response to the extracted country code information not matching the country code information stored in the memory, the signal processing device (170) is configured to display the message indicating a country code information mismatch and a country code information change message.

4. The apparatus of claim 3, wherein, in response to a selection input for the extracted country code information while the extracted country code information does not match the country code information stored in the memory, the wireless communication device (155) is configured to set wireless channel and wireless transmission power based on the extracted country code information.

5. The apparatus of claim 3, wherein, in response to a selection input for the country code information stored in the memory while the extracted country code information does not match the country code information stored in the memory, the wireless communication device (155) is configured to set wireless channel and wireless transmission power based on the country code information stored in the memory.

6. The apparatus of any one of claims 1 to 5, wherein the wireless communication device (155) is configured to perform wireless communication with an access point device based on the set wireless channel and wireless transmission power, and
wherein the signal processing device (170) is configured to connect to a server through the access point device and display an image corresponding to image data received from the server on the display.

7. The apparatus of claim 6, wherein, in response to a packet error rate of a wireless signal received from the access point device being greater than or equal to a predetermined threshold, the wireless communication device (155) is configured to perform channel change.

8. The apparatus of claim 7, wherein, in response to channel change based on the packet error rate of a wireless signal received from the access point device being performed more than a reference number of times, the wireless communication device (155) is configured to perform scanning of the beacon frame again.

9. The apparatus of any one of claims 1 to 8, wherein, in response to a plurality of beacon frames being received from a plurality of access point devices, the wireless communication device (155) is configured to extract country code information from each of the plurality of beacon frames and set wireless channel and wireless transmission power based on the most frequently occurring country code information among the plurality of extracted country code information.

10. The apparatus of any one of claims 1 to 9, wherein, in response to a plurality of beacon frames being received from a plurality of access point devices, the wireless communication device (155) is configured to extract country code information from each of the plurality of beacon frames and, in response to the most frequently occurring country code information being not found among the plurality of extracted country code information, set wireless channel and wireless transmission power based on the country code information corresponding to the beacon frame with the strongest signal strength.

11. The apparatus of any one of claims 1 to 10, wherein the wireless communication device (155) is configured to receive data based on one of frequency bands of 2.4 GHz, 5 GHz, and 6 GHz.

12. The apparatus of any one of claims 1 to 11, wherein the wireless communication device is configured to receive data based on one of frequency bandwidths of 20 MHz, 40 MHz, 80 MHz, and 160 MHz.

13. The apparatus of any one of claims 1 to 12, wherein the wireless communication device (155) comprises:
a first antenna (ANTa) configured to receive a wireless signal of a first frequency band;
a second antenna (ANTb) configured to receive a wireless signal of a second frequency band;
a third antenna (ANTc) configured to receive a wireless signal of a third frequency band; and
a processor (710) configured to control one of the first to third antennas to scan the beacon frame, set wireless channel and wireless transmission power based on the country code information stored in the memory in response to the beacon frame being not received within the predetermined period of time, extract country code information within the beacon frame in response to the beacon frame being received within the predetermined period of time, and set wireless channel and wireless transmission power based on the extracted country code information.

## Patentansprüche

1. Bildanzeigevorrichtung (100), umfassend:
eine Anzeige (180);
einen Speicher (140), der dazu eingerichtet ist, Ländercodeinformationen zu speichern;
eine Signalverarbeitungsvorrichtung (170), die dazu eingerichtet ist, ein Bildsignal an die Anzeige auszugeben; und
eine drahtlose Kommunikationsvorrichtung (155), die dazu eingerichtet ist, eine drahtlose Kommunikation mit einer externen Vorrichtung durchzuführen,
wobei die drahtlose Kommunikationsvorrichtung (155) eingerichtet ist zum:
Abtasten eines Bakenrahmens als Reaktion darauf, dass eine Zugangspunktvorrichtung nicht registriert ist oder ein drahtloses Signal von einer Zugangspunktvorrichtung empfangen wird, die eine Netzwerkadresse aufweist, die sich von einer Netzwerkadresse einer registrierten Zugangspunktvorrichtung unterscheidet,
Einstellen eines drahtlosen Kanals und einer drahtlosen Übertragungsleistung basierend auf den im Speicher gespeicherten Ländercodeinformationen als Reaktion darauf, dass innerhalb einer vorbestimmten Zeitspanne kein Bakenrahmen empfangen wird, und
als Reaktion darauf, dass der Bakenrahmen innerhalb der vorbestimmten Zeitspanne empfangen wird, Extrahieren der Ländercodeinformationen innerhalb des Bakenrahmens und Einstellen des drahtlosen Kanals und der drahtlosen Übertragungsleistung basierend auf den extrahierten Ländercodeinformationen.

2. Vorrichtung nach Anspruch 1, wobei als Reaktion darauf, dass die extrahierten Ländercodeinformationen mit den im Speicher gespeicherten Ländercodeinformationen übereinstimmen, die drahtlose Kommunikationsvorrichtung (155) dazu eingerichtet ist, den drahtlosen Kanal und die drahtlose Übertragungsleistung basierend auf den extrahierten Ländercodeinformationen einzustellen.

3. Vorrichtung nach einem der Ansprüche 1 bis 2, wobei als Reaktion darauf, dass die extrahierten Ländercodeinformationen nicht mit den im Speicher gespeicherten Ländercodeinformationen übereinstimmen, die Signalverarbeitungsvorrichtung (170) dazu eingerichtet ist, die Nachricht, die eine Nichtübereinstimmung der Ländercodeinformationen angibt, und eine Änderungsnachricht der Ländercodeinformationen anzuzeigen.

4. Vorrichtung nach Anspruch 3, wobei als Reaktion auf eine Auswahleingabe für die extrahierten Ländercodeinformationen, während die extrahierten Ländercodeinformationen nicht mit den im Speicher gespeicherten Ländercodeinformationen übereinstimmen, die drahtlose Kommunikationsvorrichtung (155) dazu eingerichtet ist, den drahtlosen Kanal und die drahtlose Übertragungsleistung basierend auf den extrahierten Ländercodeinformationen einzustellen.

5. Vorrichtung nach Anspruch 3, wobei als Reaktion auf eine Auswahleingabe für die im Speicher gespeicherten Ländercodeinformationen, während die extrahierten Ländercodeinformationen nicht mit den im Speicher gespeicherten Ländercodeinformationen übereinstimmen, die drahtlose Kommunikationsvorrichtung (155) dazu eingerichtet ist, den drahtlosen Kanal und die drahtlose Übertragungsleistung basierend auf den im Speicher gespeicherten Ländercodeinformationen einzustellen.

6. Vorrichtung nach einem der Ansprüche 1 bis 5, wobei die drahtlose Kommunikationsvorrichtung (155) dazu eingerichtet ist, eine drahtlose Kommunikation mit einer Zugangspunktvorrichtung basierend auf dem eingestellten drahtlosen Kanal und der drahtlosen Übertragungsleistung durchzuführen, und
wobei die Signalverarbeitungsvorrichtung (170) dazu eingerichtet ist, sich über die Zugangspunktvorrichtung mit einem Server zu verbinden und ein Bild entsprechend den vom Server empfangenen Bilddaten auf der Anzeige anzuzeigen.

7. Vorrichtung nach Anspruch 6, wobei als Reaktion darauf, dass eine Paketfehlerrate eines von der Zugangspunktvorrichtung empfangenen drahtlosen Signals größer als oder gleich einem vorbestimmten Schwellenwert ist, die drahtlose Kommunikationsvorrichtung (155) dazu eingerichtet ist, einen Kanalwechsel durchzuführen.

8. Vorrichtung nach Anspruch 7, wobei als Reaktion darauf, dass ein Kanalwechsel basierend auf der Paketfehlerrate eines von der Zugangspunktvorrichtung empfangenen drahtlosen Signals öfter als eine Referenzanzahl durchgeführt wird, die drahtlose Kommunikationsvorrichtung (155) dazu eingerichtet ist, das Abtasten des Bakenrahmens erneut durchzuführen.

9. Vorrichtung nach einem der Ansprüche 1 bis 8, wobei als Reaktion darauf, dass eine Mehrzahl von Bakenrahmen von einer Mehrzahl von Zugangspunktvorrichtungen empfangen wird, die drahtlose Kommunikationsvorrichtung (155) dazu eingerichtet ist, Ländercodeinformationen aus jedem der Mehrzahl von Bakenrahmen zu extrahieren und den drahtlosen Kanal und die drahtlose Übertragungsleistung basierend auf den am häufigsten vorkommenden Ländercodeinformationen unter der Mehrzahl von extrahierten Ländercodeinformationen einzustellen.

10. Vorrichtung nach einem der Ansprüche 1 bis 9, wobei als Reaktion darauf, dass eine Mehrzahl von Bakenrahmen von einer Mehrzahl von Zugangspunktvorrichtungen empfangen wird, die drahtlose Kommunikationsvorrichtung (155) dazu eingerichtet ist, Ländercodeinformationen aus jedem der Mehrzahl von Bakenrahmen zu extrahieren, und als Reaktion darauf, dass die am häufigsten vorkommenden Ländercodeinformationen unter der Mehrzahl von extrahierten Ländercodeinformationen nicht gefunden werden, den drahtlosen Kanal und die drahtlose Übertragungsleistung basierend auf den Ländercodeinformationen einzustellen, die dem Bakenrahmen mit der stärksten Signalstärke entsprechen.

11. Vorrichtung nach einem der Ansprüche 1 bis 10, wobei die drahtlose Kommunikationsvorrichtung (155) dazu eingerichtet ist, Daten basierend auf einem der Frequenzbänder 2,4 GHz, 5 GHz und 6 GHz zu empfangen.

12. Vorrichtung nach einem der Ansprüche 1 bis 11, wobei die drahtlose Kommunikationsvorrichtung dazu eingerichtet ist, Daten basierend auf einer der Frequenzbandbreiten 20 MHz, 40 MHz, 80 MHz und 160 MHz zu empfangen.

13. Vorrichtung nach einem der Ansprüche 1 bis 12, wobei die drahtlose Kommunikationsvorrichtung (155) umfasst:
eine erste Antenne (ANTa), die dazu eingerichtet ist, ein drahtloses Signal eines ersten Frequenzbandes zu empfangen;
eine zweite Antenne (ANTb), die dazu eingerichtet ist, ein drahtloses Signal eines zweiten Frequenzbandes zu empfangen;
eine dritte Antenne (ANTc), die dazu eingerichtet ist, ein drahtloses Signal eines dritten Frequenzbandes zu empfangen; und
einen Prozessor (710), der dazu eingerichtet ist, eine der ersten bis dritten Antennen zu steuern, um den Bakenrahmen abzutasten, den drahtlosen Kanal und die drahtlose Übertragungsleistung basierend auf den im Speicher gespeicherten Ländercodeinformationen als Reaktion darauf einzustellen, dass der Bakenrahmen nicht innerhalb der vorbestimmten Zeitspanne empfangen wird, Ländercodeinformationen innerhalb des Bakenrahmens als Reaktion darauf zu extrahieren, dass der Bakenrahmen innerhalb der vorbestimmten Zeitspanne empfangen wird, und den drahtlosen Kanal und die drahtlose Übertragungsleistung basierend auf den extrahierten Ländercodeinformationen einzustellen.

## Revendications

1. Appareil d'affichage d'image (100) comprenant:
un écran (180);
une mémoire (140) configurée pour stocker des informations de code pays;
un dispositif de traitement de signal (170) configuré pour transmettre un signal d'image à l'écran; et
un dispositif de communication sans fil (155) configuré pour être en communication sans fil avec un dispositif externe;
dans lequel le dispositif de communication sans fil (155) est configuré pour:
balayer une trame de balise dès qu'un dispositif de point d'accès n'est pas enregistré ou qu'un signal sans fil est reçu en provenance d'un dispositif de point d'accès dont l'adresse réseau diffère de celle d'un dispositif de point d'accès enregistré,
définir le canal sans fil et la puissance de transmission sans fil en fonction des informations relatives au code pays stockées en mémoire, dès qu'une trame de balise n'est pas reçue dans une durée prédéterminée, et
dès que la trame de balise est reçue dans la durée prédéterminée, extraire les informations de code pays contenues dans la trame de balise et définir le canal sans fil et la puissance de transmission sans fil en fonction des informations de code pays extraites.

2. Appareil selon la revendication 1, dans lequel, lorsque les informations de code pays extraites correspondent aux informations de code pays stockées dans la mémoire, le dispositif de communication sans fil (155) est configuré pour définir le canal sans fil et la puissance de transmission sans fil en fonction des informations de code pays extraites.

3. Appareil selon l'une quelconque des revendications 1 à 2, dans lequel, lorsque les informations de code pays extraites ne correspondent pas aux informations de code pays stockées dans la mémoire, le dispositif de traitement du signal (170) est configuré pour afficher un message indiquant une incohérence dans les informations de code pays ainsi qu'un message de modification des informations de code pays.

4. Appareil selon la revendication 3, dans lequel, en réponse à une sélection concernant les informations de code pays extraites, lorsque les informations de code pays extraites ne correspondent pas aux informations de code pays stockées en mémoire, le dispositif de communication sans fil (155) est configuré pour définir le canal sans fil et la puissance de transmission sans fil en fonction des informations de code pays extraites.

5. Appareil selon la revendication 3, dans lequel, en réponse à une sélection concernant les informations de code pays stockées en mémoire, lorsque les informations de code pays extraites ne correspondent pas à celles stockées en mémoire, le dispositif de communication sans fil (155) est configuré pour définir le canal sans fil et la puissance de transmission sans fil en fonction des informations de code pays stockées en mémoire.

6. Appareil selon l'une quelconque des revendications 1 à 5, dans lequel, le dispositif de communication sans fil (155) est configuré pour établir une communication sans fil avec un dispositif de point d'accès en fonction du canal sans fil et de la puissance d'émission sans fil définis, et
dans lequel le dispositif de traitement de signal (170) est configuré pour se connecter à un serveur par le biais du dispositif de point d'accès et pour afficher sur l'écran une image correspondant aux données d'image reçues en provenance du serveur.

7. Appareil selon la revendication 6, dans lequel, lorsque le taux d'erreurs de paquets d'un signal sans fil reçu en provenance du dispositif de point d'accès est supérieur ou égal à un seuil prédéterminé, le dispositif de communication sans fil (155) est configuré pour effectuer un changement de canal.

8. Appareil selon la revendication 7, dans lequel, lorsque le changement de canal basé sur le taux d'erreur de paquets d'un signal sans fil reçu en provenance du dispositif de point d'accès a été effectué plus d'un certain nombre de référence de fois, le dispositif de communication sans fil (155) est configuré pour effectuer à nouveau un balayage de la trame de balise.

9. Appareil selon l'une quelconque des revendications 1 à 8, dans lequel, en réponse à la réception d'une pluralité de trames de balise provenant d'une pluralité de dispositifs de point d'accès, le dispositif de communication sans fil (155) est configuré pour extraire des informations de code pays de chacune parmi la pluralité des trames de balise et pour définir le canal sans fil et la puissance de transmission sans fil en fonction des informations de code pays les plus fréquentes parmi la pluralité d'informations de code pays extraites.

10. Appareil selon l'une quelconque des revendications 1 à 9, dans lequel, en réponse à la réception d'une pluralité de trames de balise reçues en provenance d'une pluralité de dispositifs de point d'accès, le dispositif de communication sans fil (155) est configuré pour extraire des informations de code pays de chacune parmi la pluralité des trames de balise et, si les informations de code pays les plus fréquentes ne sont pas trouvées parmi la pluralité des informations de code pays extraites, pour définir le canal sans fil et la puissance de transmission sans fil en fonction des informations de code d pays correspondant à la trame de balise présentant l'intensité de signal la plus élevée.

11. Appareil selon l'une quelconque des revendications 1 à 10, dans lequel, le dispositif de communication sans fil (155) est configuré pour recevoir des données sur l'une des gammes de fréquence de 2,4 GHz, 5 GHz et 6 GHz.

12. Appareil selon l'une quelconque des revendications 1 à 11, dans lequel, le dispositif de communication sans fil est configuré pour recevoir des données en fonction de l'une des largeurs de bande de 20 MHz, 40 MHz, 80 MHz ou 160 MHz.

13. - Appareil selon l'une quelconque des revendications 1 à 2, dans lequel le dispositif de communication sans fil (155) comprend:
une première antenne (ANTa) conçue pour recevoir un signal sans fil d'une première gamme de fréquences;
une deuxième antenne (ANTa) conçue pour recevoir un signal sans fil d'une deuxième gamme de fréquences;
une troisième antenne (ANTa) conçue pour recevoir un signal sans fil d'une troisième gamme de fréquences; et
un processeur (710) configuré pour amener l'une parmi les première, deuxième et troisième antennes afin à balayer la trame de balise, à définir le canal sans fil et la puissance de transmission sans fil en fonction des informations de code pays stockées dans la mémoire, dès que la trame de balise n'a pas été reçue dans la durée prédéterminée, à extraire les informations de code pays contenues dans la trame de balise en réponse à la réception de la trame de balise dans la durée prédéterminée, et à définir le canal sans fil et la puissance de transmission sans fil en fonction des informations de code pays extraites.
